(19) Europäisches Patentamt
European Patent Office
Office européen des brevets

(11) **EP 4 750 094 A2**

(12) # DEMANDE DE BREVET EUROPEEN

(43) Date de publication:
**27.05.2026   Bulletin 2026/22**

(21) Numéro de dépôt: **25217842.1**

(22) Date de dépôt: **21.11.2025**

(51) Classification Internationale des Brevets (IPC):
**H04S 7/00** *(2006.01)*      **H04S 3/00** *(2006.01)*

(52) Classification Coopérative des Brevets (CPC):
**H04S 7/301;** H04S 3/00; H04S 7/303;
H04S 2400/13

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **25.11.2024   FR 2412954**

(71) Demandeur: **SAGEMCOM BROADBAND SAS
92270 Bois-Colombes (FR)**

(72) Inventeurs:
• **SABATIER, Pierre
92270 BOIS-COLOMBES (FR)**
• **BOURGOIN, Gilles
92270 BOIS-COLOMBES (FR)**

(74) Mandataire: **Cabinet Boettcher
5, rue de Vienne
75008 Paris (FR)**

(54) **CARACTÉRISATION ACOUSTIQUE D'UN ÉQUIPEMENT AUDIO AVEC LOCALISATION PAR ONDES RADIO**

(57)     Equipement de diffusion audio (2), agencé pour mettre en œuvre à partir de premiers signaux audio (Sa1) une restitution audio multicanale dans un système audio (1), et pour :
- acquérir une position de l'équipement de restitution audio (3), obtenue par une méthode de localisation utilisant des ondes radiofréquences ;
- acquérir au moins un paramètre audio représentatif d'une réponse acoustique de l'équipement de restitution audio (3) ;
- adapter au moins un des premiers signaux audio (Sa1) en fonction de la position de l'équipement de restitution audio (3), et du au moins un paramètre audio, pour obtenir des deuxièmes signaux audio (Sa2) ;
- mettre en œuvre la restitution audio multicanale en utilisant les deuxièmes signaux audio (Sa2).

**Fig. 1**

## Description

L'invention concerne le domaine des systèmes audio comprenant un équipement de diffusion audio (par exemple un boîtier décodeur) et un ou des équipements de restitution audio (par exemple un téléviseur).

### ARRIERE PLAN

Un boîtier décodeur, ou STB (pour *Set-Top Box*), est un équipement de diffusion audio-vidéo, dont la fonction primaire est d'acquérir un flux audio-vidéo, de décoder ce flux, et de faire diffuser le flux vidéo par un téléviseur et le flux audio par les haut-parleurs du téléviseur et/ou éventuellement par d'autres équipements de restitution audio (barre de son, enceintes connectées, etc.).

Certains boîtiers décodeurs récents intègrent un ou plusieurs haut-parleurs. Le ou les haut-parleurs peuvent être utilisés dans une fonction d'assistant vocal, mais aussi pour contribuer à mettre en œuvre un système audio multicanal qui restitue le flux audio du flux audio-vidéo. La restitution multicanale permet d'obtenir un rendu sonore optimal et immersif.

Le système audio multicanal comporte alors des voies audio comprenant les haut-parleurs du boîtier décodeur, ainsi éventuellement que les haut-parleurs du téléviseur, et/ou les haut-parleurs d'autres équipements de restitution audio connectés au boîtier décodeur (e.g. barre de son, enceintes connectées, etc.).

On envisage d'intégrer, dans un système audio comprenant un boîtier décodeur, un nouvel équipement de restitution audio, par exemple un nouveau téléviseur. Pour mettre en œuvre la restitution multicanale, il convient de synchroniser et d'homogénéiser la restitution sonore des différents équipements de restitution audio du système.

On connaît des méthodes, mises en œuvre par un amplificateur audio-vidéo connecté à des enceintes, qui permettent de synchroniser et d'homogénéiser la restitution sonore entre les différents équipements de restitution audio. Cependant, dans ces méthodes de l'art antérieur, les enceintes doivent être connues de l'amplificateur, ce qui représente une contrainte importante pour l'utilisateur.

### OBJET

L'invention a pour objet d'intégrer un équipement de restitution audio « inconnu » dans un système audio comprenant un équipement de diffusion audio qui met en œuvre une restitution multicanale.

### RESUME

En vue de la réalisation de ce but, on propose un équipement de diffusion audio, agencé pour mettre en œuvre à partir de premiers signaux audio une restitution audio multicanale dans un système audio comprenant une pluralité de dispositifs audio, au moins l'un des dispositifs audio étant intégré dans un équipement de restitution audio distinct de l'équipement de diffusion audio,

l'équipement de diffusion audio comportant une unité de traitement agencée pour :

- acquérir une position de l'équipement de restitution audio, obtenue par une méthode de localisation utilisant des ondes radiofréquences ;
- acquérir au moins un paramètre audio représentatif d'une réponse acoustique de l'équipement de restitution audio ;
- adapter au moins un des premiers signaux audio en fonction de la position de l'équipement de restitution audio, et du au moins un paramètre audio, pour obtenir des deuxièmes signaux audio ;
- mettre en œuvre la restitution audio multicanale en utilisant les deuxièmes signaux audio.

L'unité de traitement de l'équipement de diffusion audio (par exemple un boîtier décodeur) acquiert donc la position de l'équipement de restitution audio (par exemple un téléviseur), ainsi que le ou les paramètres audio représentatifs de la réponse acoustique de l'équipement de restitution audio. L'unité de traitement utilise ces informations pour configurer précisément le système audio de manière à synchroniser et homogénéiser le son entre les différents équipements du système audio.

Ainsi, un équipement de restitution audio « inconnu », i.e. dont on ne connait ni la position, ni les performances acoustiques, peut être acoustiquement intégré de manière optimale dans un système audio piloté pour assurer un rendu audio optimal.

On propose de plus un équipement de diffusion audio tel que précédemment décrit, dans lequel l'unité de traitement est aussi agencée pour acquérir une orientation de l'équipement de restitution audio, et pour adapter au moins un des premiers signaux audio aussi en fonction de l'orientation de l'équipement de restitution audio.

On propose de plus un équipement de diffusion audio tel que précédemment décrit, comprenant un premier module de localisation primaire agencé pour mettre en œuvre une méthode de mesure de temps de vol pour mesurer une distance entre l'équipement de diffusion audio et l'équipement de restitution audio, et une méthode de mesure d'angle pour mesurer au moins un angle entre l'équipement de diffusion audio et l'équipement de restitution audio.

On propose de plus un équipement de diffusion audio tel que précédemment décrit, dans lequel le premier module de localisation primaire comprend un module UWB primaire agencé pour communiquer avec un module UWB secondaire de l'équipement de restitution audio.

On propose de plus un équipement de diffusion audio tel que précédemment décrit, le module UWB primaire comprenant deux premiers couples d'antennes positionnés orthogonalement l'un par rapport à l'autre, les deux premiers couples d'antennes étant agencés pour coopérer avec au moins un deuxième couple d'antennes intégré dans le module UWB secondaire.

On propose de plus un équipement de diffusion audio tel que précédemment décrit, dans lequel le premier module de localisation primaire est agencé pour mettre en œuvre une technique de radar, de préférence Doppler, et comporte une source radar agencée pour coopérer avec au moins une étiquette radiofréquence positionnée sur l'équipement de restitution audio.

On propose de plus un équipement de diffusion audio tel que précédemment décrit, dans lequel ledit au moins un paramètre audio est sélectionné parmi :

- un retard acoustique dû à une chaîne de transmission entre l'équipement de diffusion audio et l'équipement de restitution audio, et/ou à un traitement réalisé par l'équipement de restitution audio, et
- une fonction de transfert de l'équipement de restitution audio.

On propose de plus un équipement de diffusion audio tel que précédemment décrit, dans lequel le au moins un paramètre audio comprend un indicateur d'une modification de volume sonore résultant d'une commande de volume émise par un utilisateur à destination de l'équipement de restitution audio, l'unité de traitement étant agencée pour adapter en fonction dudit indicateur au moins un premier signal audio transmis à l'équipement de restitution audio de manière à compenser ladite modification de volume sonore.

On propose de plus un équipement de diffusion audio tel que précédemment décrit, l'équipement de diffusion audio étant un boîtier décodeur intégrant un dispositif audio comprenant au moins un haut-parleur.

On propose de plus un équipement de diffusion audio tel que précédemment décrit, l'équipement de diffusion audio étant agencé pour déterminer une position d'un utilisateur, l'unité de traitement étant agencée pour adapter au moins un premier signal audio aussi en fonction de la position de l'utilisateur.

On propose de plus un équipement de diffusion audio tel que précédemment décrit, l'équipement de diffusion audio étant connecté à un équipement accessoire distinct de l'équipement de diffusion audio et de l'équipement de restitution audio, et étant agencé pour recevoir dudit équipement accessoire la position de l'équipement de restitution audio, ainsi que ledit au moins un paramètre audio.

On propose de plus un procédé de diffusion audio, mis en œuvre dans l'unité de traitement d'un équipement de diffusion audio tel que précédemment décrit, comprenant les étapes de :

- acquérir une position de l'équipement de restitution audio, obtenue par une méthode de localisation utilisant des ondes radiofréquences ;
- acquérir au moins un paramètre audio représentatif d'une réponse acoustique de l'équipement de restitution audio ;
- adapter au moins un des premiers signaux audio en fonction de la position de l'équipement de restitution audio, et du au moins un paramètre audio , pour obtenir des deuxièmes signaux audio ;
- utiliser les deuxièmes signaux audio pour mettre en œuvre la restitution audio multicanale.

On propose de plus un programme d'ordinateur comprenant des instructions qui conduisent l'unité de traitement de l'équipement de diffusion audio tel que précédemment décrit à exécuter les étapes du procédé de diffusion audio tel que précédemment décrit.

On propose de plus un support d'enregistrement lisible par ordinateur, sur lequel est enregistré le programme d'ordinateur tel que précédemment décrit.

On propose de plus un équipement accessoire, agencé pour être connecté à un équipement de diffusion audio tel que précédemment décrit, l'équipement accessoire comportant :

- un deuxième module de localisation primaire agencé pour évaluer la position de l'équipement de restitution audio, le deuxième module de localisation primaire étant agencé pour mettre en œuvre la méthode de localisation utilisant des ondes radiofréquences ;
- un module de capture audio, comprenant au moins un microphone, et agencé pour produire le au moins un paramètre audio représentatif de la réponse acoustique de l'équipement de restitution audio ;
- un premier module de communication, agencé pour transmettre à l'équipement de diffusion audio la position de l'équipement de restitution audio, ainsi que le au moins un paramètre audio.

On propose de plus un équipement accessoire tel que précédemment décrit, le premier module de communication étant agencé pour recevoir les deuxièmes signaux audio transmis par l'équipement de diffusion audio, l'équipement accessoire comprenant en outre un deuxième module de communication agencé pour transmettre les deuxièmes signaux audio aux dispositifs audio du système audio pour mettre en œuvre la restitution audio multicanale.

On propose de plus un système comprenant l'équipement de diffusion audio tel que précédemment décrit, et un module de localisation secondaire agencé pour être positionné sur l'équipement de restitution audio et utilisé pour mettre en œuvre la méthode de localisation.

On propose de plus un système tel que précédemment décrit, comprenant un équipement de diffusion audio tel que précédemment décrit, le module de localisation radiofréquence comprenant ladite au moins une étiquette radiofréquence qui est une étiquette passive comprenant un réseau de résonateurs diélectriques et un réflecteur *Van Atta.*

On propose de plus un système tel que précédemment décrit, comprenant un équipement de diffusion audio tel que précédemment décrit, le module de localisation radiofréquence comprenant la au moins une étiquette radiofréquence qui est une étiquette active comprenant un réflecteur *Van Atta,* un commutateur hyperfréquence, et un processeur agencé pour activer et désactiver le réflecteur *Van Atta,* selon une fréquence déterminée, en pilotant le ou les commutateurs hyperfréquences.

On propose de plus un système tel que précédemment décrit, comprenant un équipement de diffusion audio tel que précédemment décrit, le système comprenant en outre l'équipement accessoire tel que précédemment décrit.

L'invention sera mieux comprise à la lumière de la description qui suit de modes de mise en œuvre particuliers non limitatifs de l'invention.

## BREVE DESCRIPTION DES DESSINS

Il sera fait référence aux dessins annexés parmi lesquels :

[Fig. 1] la figure 1 représente un boîtier décodeur et un téléviseur ;

[Fig. 2] la figure 2 représente des étapes d'un procédé de diffusion audio mis en œuvre dans le boîtier décodeur ; [Fig. 3] la figure 3 illustre la technique du TWR ;

[Fig. 4] la figure 4 illustre la technique du PDoA ;

[Fig. 5] la figure 5 représente le module UWB primaire ;

[Fig. 6] la figure 6 représente les différents angles du boîtier décodeur et du téléviseur ;

[Fig. 7] la figure 7 représente un boîtier décodeur et un téléviseur ;

[Fig. 8] la figure 8 représente le téléviseur dans sa position de référence, et le téléviseur orienté d'un angle β ;

[Fig. 9] la figure 9 représente un réflecteur Van Atta ;

[Fig. 10] la figure 10 illustre le principe de détermination de l'angle d'orientation β que forme la normale à la surface de l'étiquette par rapport à la normale à la surface de référence du boîtier décodeur ;

[Fig. 11] la figure 11 représente une étiquette active ;

[Fig. 12] la figure 12 représente un boîtier décodeur et un téléviseur ;

[Fig. 13] la figure 13 est un graphique comprenant les courbes du signal de synchronisation émis et du signal de synchronisation reçu ;

[Fig. 14] la figure 14 est un graphique représentant l'intercorrélation entre le signal de synchronisation émis et le signal de synchronisation reçu ;

[Fig. 15] la figure 15 représente un graphique comprenant la courbe du signal de test émis, un graphique comprenant la courbe du signal de test reçu, et un graphique représentant la fonction de transfert du téléviseur ;

[Fig. 16] la figure 16 représente un boîtier décodeur, un téléviseur et un utilisateur ;

[Fig. 17] la figure 17 représente un boîtier décodeur, un téléviseur, des enceintes et un équipement accessoire.

## DESCRIPTION DETAILLEE

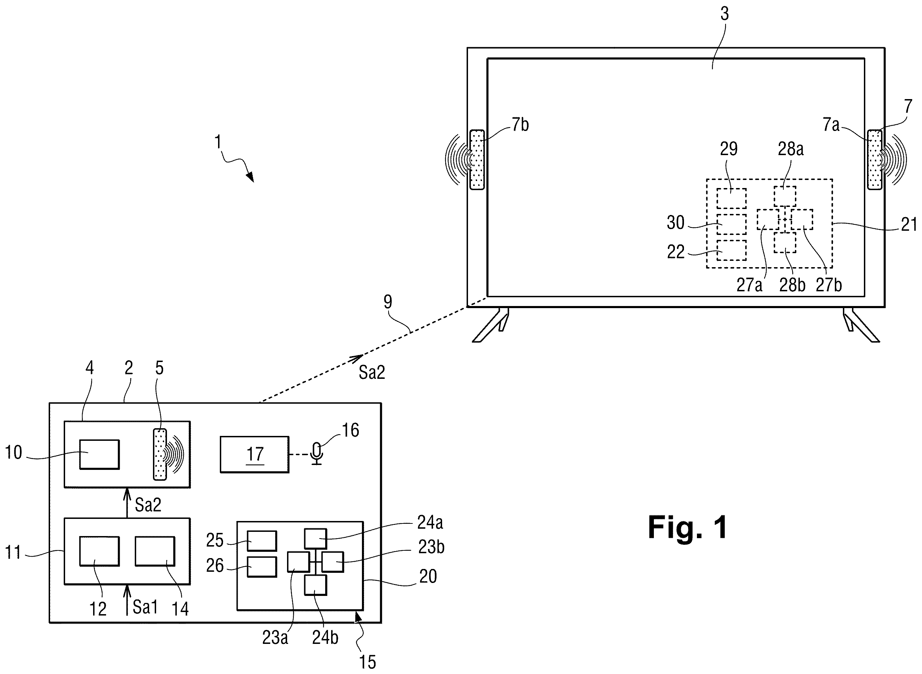

En référence à la figure 1, le système audio 1 comprend un équipement de diffusion audio 2 et un équipement de restitution audio 3, qui sont deux équipements distincts connectés l'un avec l'autre.

Par « équipement de diffusion audio », on entend un équipement qui acquiert (de l'extérieur ou en interne) un flux audio comprenant un ou des signaux audio, et qui transmet le ou les signaux audio à un ou des équipements de restitution audio pour leur restitution.

Par « équipement de restitution audio », on entend un équipement qui comprend un dispositif audio comprenant au moins un haut-parleur, qui reçoit au moins un signal audio et qui le restitue en produisant un signal sonore grâce à son ou ses haut-parleurs.

Ici, l'équipement de diffusion audio 2 est un boîtier décodeur (aussi appelé décodeur TV, ou décodeur audiovisuel, ou *Set-Top Box*). Le boîtier décodeur 2 est un boîtier décodeur « avancé » qui intègre un dispositif audio 4 comprenant plusieurs haut-parleurs 5.

L'équipement de restitution audio 3 est ici un téléviseur qui intègre aussi un dispositif audio comprenant plusieurs haut-parleurs 7, en l'occurrence ici un haut-parleur de droite 7a et un haut-parleur de gauche 7b.

Le système audio 1 comporte aussi possiblement d'autres équipements de restitution audio, tels que des enceintes « satellites » placées autour du téléviseur 3, mais qui ne sont pas évoquées pour le moment.

Le boîtier décodeur 2 et le téléviseur 3 sont connectés ici par une liaison HDMI 9 (pour *High Definition Multimedia Interface).*

Les fonctions primaires du boîtier décodeur 2 consistent à recevoir un flux audio-vidéo, à le traiter, à séparer le flux audio et le flux vidéo, à transmettre le flux vidéo au téléviseur 3, et à transmettre tout ou partie du flux audio aux dispositifs audio du système audio 1.

Le flux audio-vidéo peut être issu d'une source quelconque, qui est par exemple un réseau de diffusion (réseau de télévision par satellite, connexion Internet, réseau de télévision numérique terrestre (TNT), réseau de télévision par câble, etc.), un autre équipement connecté au boîtier décodeur (un lecteur de CD, de DVD ou de *BlueRay,* un smartphone, une tablette, etc.), ou bien encore un support de stockage (et par exemple une clef USB ou une carte mémoire connectée au boîtier décodeur).

Le boîtier décodeur 2 joue aussi le rôle d'équipement de restitution audio dans le système audio 1 : ses haut-parleurs 5 restituent une partie du flux audio.

Le dispositif audio 4 du boîtier décodeur 2 comporte aussi une chaîne audio 10, comprenant des composants (notamment un ou des amplificateurs audio) qui mettent en forme les signaux audio restitués par les haut-parleurs 5 du boîtier décodeur 2.

Le boîtier décodeur 2 comprend de plus une unité de traitement 11. L'unité de traitement 11 est une unité électronique et logicielle. L'unité de traitement 11 comprend au moins un composant de traitement 12, qui est par exemple un processeur « généraliste », un processeur spécialisé dans le traitement du signal (ou DSP, pour *Digital Signal Processor*), un processeur spécialisé pour les algorithmes d'intelligence artificielle (de type NPU, pour *Neural Processing Unit*), un microcontrôleur, ou bien un circuit logique programmable tel qu'un FPGA (pour *Field Programmable Gate Arrays*) ou un ASIC (pour *Application Specific Integrated Circuit*).

L'unité de traitement 11 comprend aussi une ou des mémoires 14, reliées à ou intégrées dans le ou les composants de traitement 12. Au moins l'une de ces mémoires 14 forme un support d'enregistrement lisible par ordinateur, sur lequel est enregistré au moins un programme d'ordinateur comprenant des instructions qui conduisent l'unité de traitement 11 à exécuter les étapes du procédé de diffusion audio qui va être décrit.

Le flux audio comprend des premiers signaux audio Sa1.

L'unité de traitement 11 du boîtier décodeur 2 met en œuvre à partir des premiers signaux audio Sa1 du flux audio une restitution audio multicanale dans le système audio 1.

Le boîtier décodeur 2 comprend de plus un premier module de localisation primaire 15. Le premier module de localisation primaire 15 met en œuvre une méthode de localisation utilisant des ondes radiofréquences, pour déterminer la position du téléviseur 3, et donc des haut-parleurs 7 du téléviseur 3. Avantageusement, la méthode de localisation permet aussi de déterminer l'orientation du téléviseur 3, et donc des haut-parleurs 7 du téléviseur 3.

Dans le cadre de la présente invention, le terme « radiofréquence » doit être compris de manière large comme pouvant inclure :

- une onde radioélectrique dont le spectre appartient au domaine de fréquences qui s'étend de 8,3 kHz à 3000 GHz, en particulier de 3,1 à 10,6 GHz ; ou
- une onde optique en particulier dans le domaine de l'infrarouge.

Le boîtier décodeur 2 comprend de plus un ou des microphones 16, et une chaîne d'acquisition 17 reliée aux microphones 16 pour traiter les signaux audio produits par les microphones 16 à partir de la capture de signaux sonores. Le boîtier décodeur 2 utilise notamment ces microphones 16 pour acquérir au moins un paramètre audio représentatif d'une réponse acoustique du téléviseur 3.

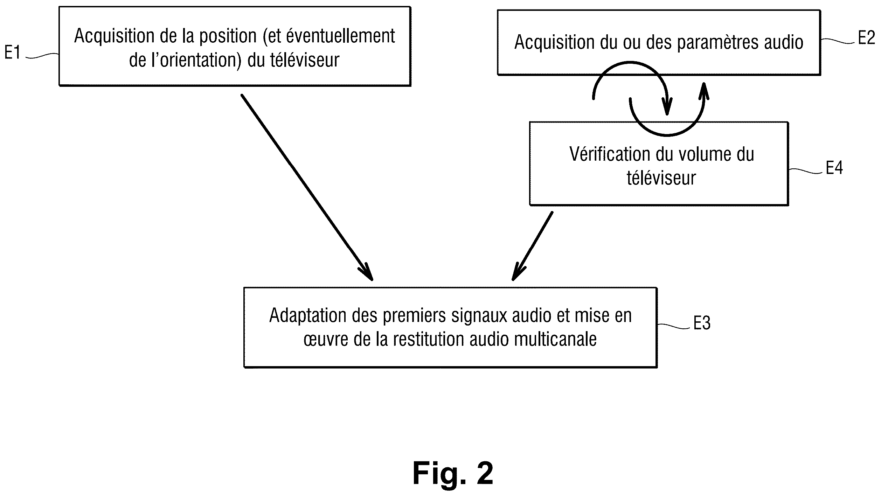

En référence à la figure 2, l'unité de traitement 11 du boîtier décodeur 2 est agencée pour :

- acquérir une position du téléviseur 3, obtenue par une méthode de localisation utilisant des ondes radiofréquences : étape E1 ;
- acquérir au moins un paramètre audio représentatif d'une réponse acoustique du téléviseur 3 : étape E2 ;
- adapter au moins un des premiers signaux audio Sa1 en fonction de la position du téléviseur 3, et du au moins un paramètre audio, pour obtenir des deuxièmes signaux audio Sa2, et mettre en œuvre la restitution audio multicanale en utilisant les deuxièmes signaux audio Sa2 : étape E3.

Avantageusement, à l'étape E1, l'unité de traitement 11 acquiert aussi l'orientation du téléviseur 3, et à l'étape E3, l'unité de traitement 11 adapte au moins un des premiers signaux audio Sa1 aussi en fonction de l'orientation du téléviseur 3.

L'adaptation de chaque premier signal audio Sa1 comprend par exemple une optimisation du niveau dudit premier signal audio Sa1 selon la fréquence.

L'unité de traitement 11 acquiert donc le flux audio, produit les deuxièmes signaux audio Sa2 à partir des premiers signaux audio Sa1, et met en œuvre la restitution audio multicanale en utilisant les deuxièmes signaux audio Sa2 qui sont transmis aux dispositifs audio du système audio 1 (ici intégrés dans le téléviseur 3 et le boîtier décodeur 2).

On comprend que chaque deuxième signal audio Sa2, qui est associé à un premier signal audio Sa1 qui ne subit pas l'adaptation qui vient d'être évoquée, est égal au premier signal audio Sa1 lui-même.

Comme on le verra plus bas, les paramètres audio peuvent comprendre un indicateur d'une modification de volume du téléviseur. L'unité de traitement 11 vérifie le volume et adapte un ou plusieurs premiers signaux audio Sa1 pour compenser cette modification : étape E4.

Le boîtier décodeur 2 peut ainsi, sans connaître le téléviseur 3, le caractériser acoustiquement dans l'environnement de l'utilisateur, et ainsi tenir compte de ses performances acoustiques, qui incluent par exemple la réponse en fréquence et l'efficacité, en tenant compte aussi de réverbérations et réflexions du son en fonction de la position du téléviseur 3 par rapport aux murs de la salle et aux objets. On assure ainsi une restitution du son immersive incluant les haut-parleurs 7 du téléviseur 3.

Le traitement illustré à la figure 2 est réalisé par exemple à chaque calibration du système audio 1, ou bien à intervalles réguliers (par exemple tous les jours).

On s'intéresse tout d'abord à la méthode de localisation qui permet de déterminer la position du téléviseur 3 et, optionnellement, son orientation.

Le premier module de localisation primaire 15 est agencé pour mettre en œuvre une méthode de mesure de temps de vol pour mesurer une distance entre le boîtier décodeur 2 et le téléviseur 3, et une méthode de mesure d'angle pour mesurer au moins un angle entre le boîtier décodeur 2 et le téléviseur 3.

La méthode de localisation utilise de préférence la technologie UWB (pour *Ultra Wide Band,* que l'on peut traduire par Ultra Large Bande).

Dans un premier mode de réalisation, la méthode de localisation utilise une technique de TWR (*Two Ways Ranging,* que l'on pourrait traduire par mesure de distance aller-retour) et une technique de PDOA (*Phase Direction Of Arrival* que l'on pourrait traduire par mesure d'angle d'arrivée). La mise en œuvre conjointe de ces deux techniques permet d'obtenir une localisation en 3D (ce qui correspond au cas d'un système audio implanté dans une maison).

Comme illustré sur la figure 1, le premier module de localisation primaire 15 du boîtier décodeur 2 comporte un module UWB primaire 20.

On installe sur le téléviseur 3 un module de localisation secondaire (radiofréquence), qui est ici un module UWB secondaire 21. Il s'agit par exemple d'une étiquette (étiquette autocollante par exemple) ou « *tag* », qui peut être fixée de manière permanente ou bien temporairement seulement. Le module UWB secondaire 21 est équipé d'une batterie ou pile 22 pour son alimentation électrique.

Bien sûr, la position sur les figures du module UWB secondaire 21 ne correspond pas à la position réelle. Le module 21 est positionné de préférence au milieu de la partie supérieure du cadre du téléviseur 3 pour localiser les haut-parleurs du téléviseur 3.

Le module UWB primaire 20 communique avec le module UWB secondaire 21. La méthode de localisation utilise donc la technique de TWR pour calculer un temps de vol de signaux UWB pour mesurer une distance entre le module UWB primaire 20 et le module UWB secondaire 21, et la technique de PDoA pour mesurer au moins un angle entre le boîtier décodeur 2 et le téléviseur 3.

Le principe de l'UWB repose sur des trains d'ondes contenant des informations et également un horodatage, le système étant synchronisé temporellement par ailleurs. Le train d'ondes est envoyé par un émetteur, reçu par un récepteur qui le décode puis le renvoie à l'émetteur. Le temps de vol radio est ainsi déterminé en mesurant le temps de trajet dans un sens et dans l'autre et en retranchant les délais de trajet dans l'électronique ainsi que les temps de traitement logiciel dans chacun des émetteur et récepteur. Le temps de vol (ou ToF pour *Time of Flight*) est déterminé par la technique du TWR.

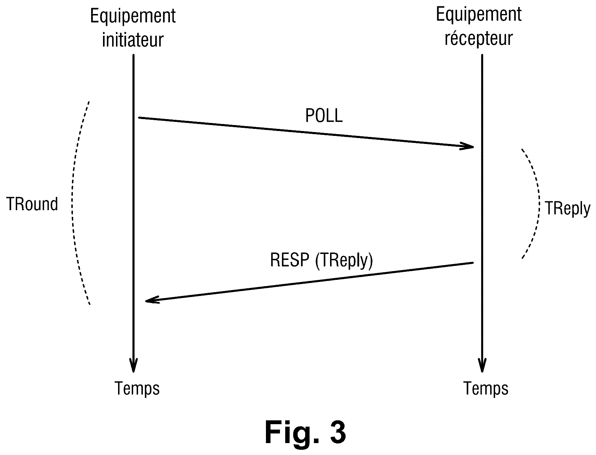

En référence à la figure 3, dans cette méthode, un équipement initiateur envoie un premier message « POLL », et un équipement récepteur répond, un temps précis après l'émission, en émettant un deuxième message « RESP ». L'équipement initiateur soustrait alors, au temps **TRound** entre l'émission du premier message et la réception du deuxième message, le temps de réponse **TReply** (connu) de l'équipement récepteur.

L'équipement initiateur obtient ainsi le temps de propagation de deux ondes. L'équipement initiateur calcule alors :

$$ToF = \frac{(TRound - TReply)}{2}$$

La distance entre l'équipement initiateur et l'équipement récepteur est obtenue par la formule :

$$Distance = ToF \times c$$

(où c est la célérité de l'onde radio dans l'air).

Le TWR permet aussi de mesurer également l'angle d'arrivée en mode réception par mesure de la différence de temps d'arrivée et ou la phase du signal sur une paire d'antennes, comme cela va être décrit.

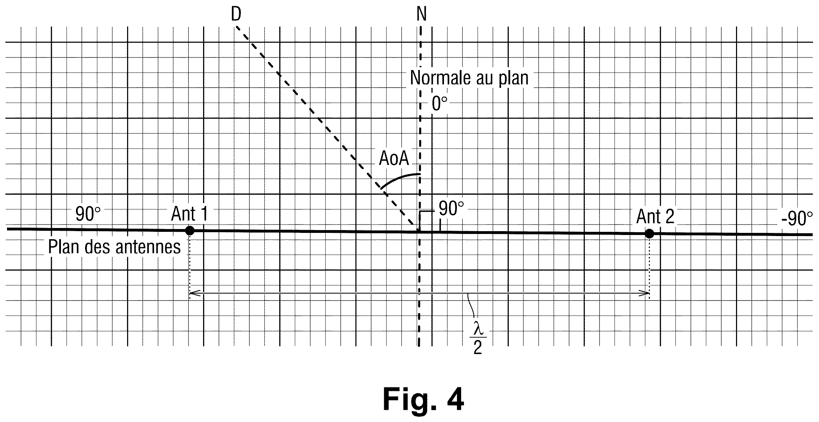

En référence à la figure 4, la technique PDoA classique fonctionne de la manière suivante avec deux modules de communication UWB comprenant chacun deux antennes.

Chaque module de communication UWB est capable de mesurer l'angle d'arrivée (*AoA*), qui est l'angle entre :

- la droite D reliant ledit module de communication UWB et un autre module de communication UWB d'un autre équipement ;
- la droite N normale audit module de communication UWB, c'est-à-dire une droite imaginaire orthogonale au plan dans lequel s'étendent les deux antennes UWB Ant1, Ant2 dudit module de communication UWB.

Cet angle *AoA* est calculé grâce à une mesure du déphasage de la porteuse du signal reçu entre les deux antennes Ant1, Ant2, ou PDoA (pour *Phase Difference of Arrival,* que l'on pourrait traduire par différence de phase d'arrivée). Ce déphasage correspond à une faible différence de distance entre la mesure de distance obtenue via une antenne Ant1 et la mesure de distance obtenue via l'autre antenne Ant2.

Le PDoA est lié à l'angle d'arrivée (*AoA*) par cette équation :

$$AoA = arcsin\left(\frac{PDoA \times \lambda}{2\pi d}\right)$$

où :

- $\lambda$ est la longueur d'onde de la porteuse du signal UWB ;

- d est la distance entre les antennes Ant1, Ant2. Ici, on améliore le système de la manière suivante.

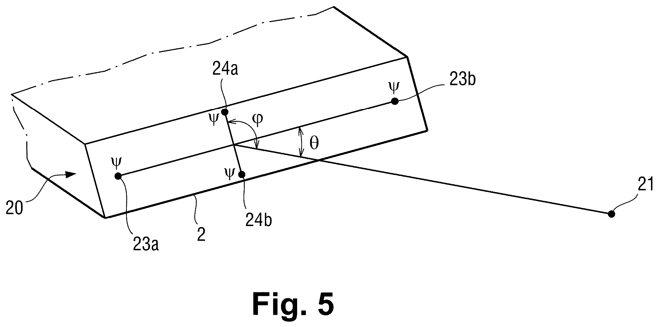

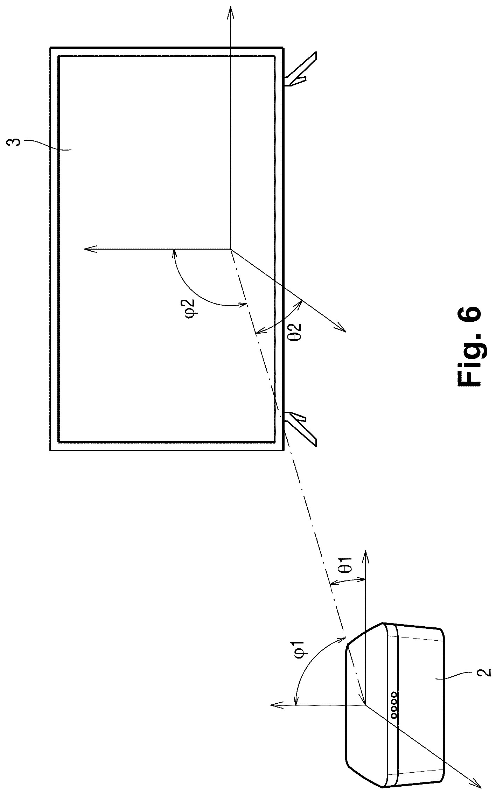

En référence aux figures 5 et 6, le module UWB primaire 20 du boîtier décodeur 2 comprend ici deux premiers couples d'antennes 23a, 23b et 24a, 24b, positionnés orthogonalement l'un par rapport à l'autre, un commutateur d'antenne 25, et un module de traitement 26 intégré possiblement dans l'unité de traitement 11).

Le module UWB secondaire 21 du téléviseur 3 comprend au moins un deuxième couple d'antennes, ici deux deuxièmes couples d'antennes 27a, 27b et 28a, 28b, positionnés orthogonalement l'un par rapport à l'autre, un commutateur d'antenne 29 et un composant de traitement 30.

Le module de traitement 26 du module UWB primaire 20 pilote donc le commutateur d'antenne 25 pour mesurer l'angle φ1, puis pilote le commutateur d'antenne 25 pour mesurer l'angle θ1. Le module UWB primaire 20 génère deux mesures consécutives pour produire la mesure des deux angles φ1 et θ1.

Le module UWB primaire 20 met aussi en œuvre la méthode du temps de vol pour mesurer la distance entre le module UWB primaire 20 et le module UWB secondaire 21, et donc entre le boîtier décodeur 2 et le téléviseur 3.

Le boîtier décodeur 2 obtient donc une mesure en coordonnées polaires dans l'espace avec d'une part la distance de vol et d'autre part les deux angles.

Le boîtier décodeur 2 peut ainsi mesurer la position exacte du module UWB secondaire 21 dans l'espace par rapport au boîtier décodeur 2.

De même, le module UWB secondaire 21 mesure les angles φ2 et θ2, et peut mesurer la position exacte du boîtier décodeur 2 dans l'espace par rapport au téléviseur 3.

Le module UWB secondaire 21 transmet ses mesures au module UWB primaire 20 (par une communication UWB), et l'unité de traitement 11 du boîtier décodeur 2 peut alors déterminer :

- les différents angles d'orientation du boîtier décodeur 2 ;
- les différents angles d'orientation du téléviseur 3 ;
- la distance entre les deux appareils.

La fréquence de la porteuse du signal UWB utilisée est par exemple égale à 6,5 GHZ. La distance de séparation des antennes Ant1, Ant2 d'un couple d'antennes d'un module UWB qui est fixée à λ/2 (voir figure 4) est donc égale à environ 26 mm, ce qui permet d'intégrer facilement les modules UWB 20, 21 dans le boîtier décodeur 2 et dans le téléviseur 3 en raison de leur faible encombrement.

On note qu'il est possible de ne prévoir qu'une seule paire d'antennes dans le module UWB secondaire 21 du téléviseur 3. On n'a alors plus accès à l'orientation selon l'un des angles du téléviseur 3 et du boîtier décodeur 2, mais il est possible alors de considérer que le téléviseur 3 est correctement placé dans sa position nominale verticale et le boîtier décodeur 2 dans sa position nominale horizontale (ou verticale si boîtier décodeur est ainsi conçu).

Dans un deuxième mode de réalisation, le premier module de localisation primaire est agencé pour mettre en œuvre une technique de type radar, de préférence Doppler.

De manière connue, un dispositif radar permet de mesurer des angles et des distances. En fonction de la nature de la source radar, plusieurs modes de réalisation peuvent être envisagés.

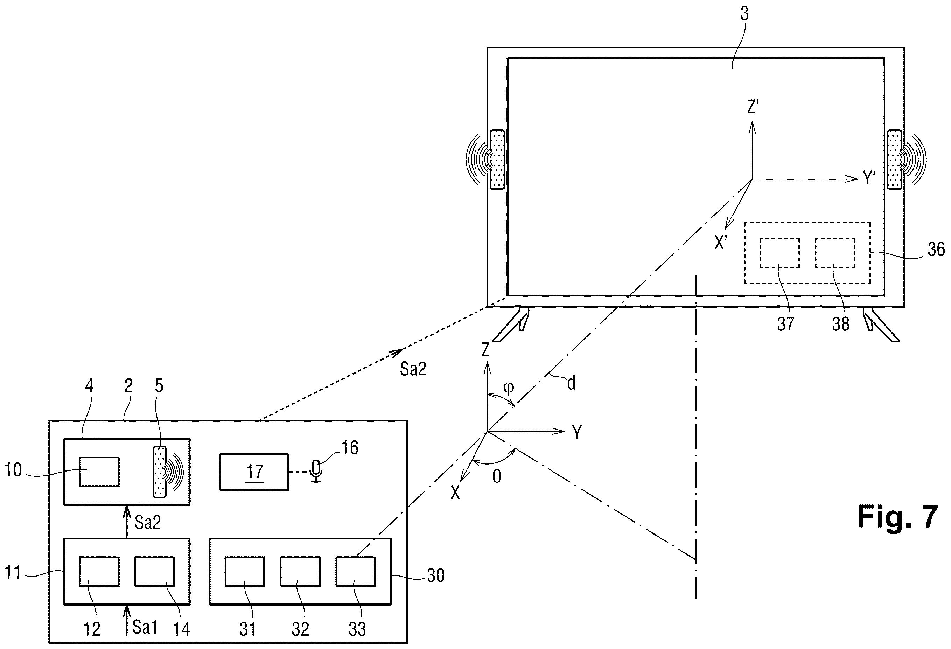

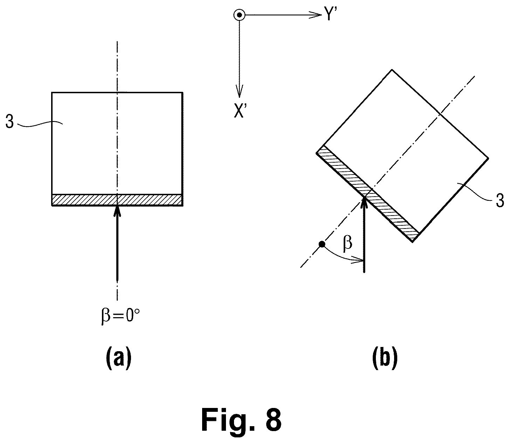

En référence aux figures 7 et 8, le premier module de localisation primaire 34 du boîtier décodeur 2 comprend un module radar primaire 35 comprenant une source radar 31, un module de traitement 32 (intégré possiblement dans l'unité de traitement 11) et un module de réception 33.

On équipe le téléviseur 3 d'un module de localisation secondaire (radiofréquence), ici un module radar secondaire comprenant au moins une étiquette radiofréquence 36, qui peut être passive ou active.

La source radar 31 est ici une source FMCW (pour *Frequency Modulated Continuous Wave)*. La source 31 émet une onde continue. La source 31 est configurée pour émettre un signal radar avec une fréquence de balayage, de préférence dans le domaine des ondes millimétriques, par exemple dans la bande de fréquences 57-64 GHz.

Cette bande de fréquences présente notamment l'avantage suivant. Dans le cas où le système audio 1 comporte un certain nombre d'équipements de restitution audio en plus du téléviseur 3 (par exemple plusieurs enceintes), et donc un certain nombre d'étiquettes, cette bande de fréquences est suffisamment large pour faire réagir, à tour de rôle, un grand ensemble d'étiquettes RF, pour les distinguer sans risque de confusion.

L'étiquette 36 du téléviseur 3 est configurée pour émettre un signal à une fréquence de résonance propre en réponse au signal radar.

Le module de réception 33 du boîtier décodeur 2 est configuré pour recevoir des signaux émis par l'étiquette 36 en réponse au signal radar.

Le module de traitement 32 du boîtier décodeur 2 est configuré pour analyser les signaux reçus par le module de réception 33 et en déduire des paramètres de position du téléviseur 3 par rapport au boîtier décodeur 2, ces paramètres comprenant une distance et au moins un angle.

Avantageusement, la source radar 31, le module de réception 32 et le module de traitement 33 sont mis en œuvre dans un même composant, et par exemple dans l'un des composants radar à 60 GHz suivants : *Texas Instrument* IWRL6432 ; *Infineon* BGT60TR13C (marques déposées).

L'étiquette RF 36 peut être ou passive ou active (en répondant à une fréquence spécifique ou en reposant sur une réponse différente dans le temps de manière à discriminer et servir à la localisation).

Pour pouvoir être facilement fixée et avec un encombrement minimum sur le téléviseur 3, l'étiquette RF 36 est de préférence souple. L'étiquette 36 est fabriquée par exemple avec un film de polyamide (par exemple du *Kapton,* marque déposée) et de cuivre ou à base de polycarbonate avec une couche d'argent imprimée. L'étiquette 36 peut comprendre des motifs à caractère résonant à une ou plusieurs fréquences spécifiques, chaque fréquence de résonance étant déterminée notamment par la géométrie et la taille des motifs.

Ainsi, ce type de circuit permet de définir une signature radar caractérisée par une ou plusieurs fréquence(s) de résonance spécifique(s) et associée(s) respectivement à chaque équipement de restitution audio, ce qui permet avantageusement d'identifier chaque équipement de restitution audio de manière unique, lors du sondage par la source radar 31.

Pour chaque valeur de la fréquence et de l'angle de balayage de la source radar 31, le module de réception 33 mesure la réponse fréquentielle, c'est-à-dire l'amplitude (ou la puissance) en fonction de la fréquence des signaux émis par l'étiquette 36. Sur la base de ces amplitudes (respectivement puissances), le module de traitement 32 détermine les coordonnées de position, c'est-à-dire la distance d et l'angle d'azimut θ et éventuellement l'angle d'élévation φ du téléviseur 3 par rapport à la source radar 31, selon des techniques de traitement radar connues.

Avantageusement, le module de traitement 32 détermine aussi l'orientation β du téléviseur 3 par rapport à sa position de référence.

Dans la majorité des cas, on considère que le téléviseur 3 est positionné à la même hauteur que le boîtier décodeur 2 et donc que la source radar 31 (φ fixé à 90°), si bien qu'il suffit de mesurer l'angle d'azimut θ. Il est aussi possible de déterminer tous les paramètres d, φ, θ, β.

Pour cela, lors d'une étape de calibration préalable (par exemple une caractérisation en usine), les réponses en amplitude (ou puissance) de différentes étiquettes RF sont pré-enregistrées en fonction de distances dr et d'orientations de référence βr de chaque étiquette RF par rapport à la source radar.

On a en effet constaté que les étiquettes RF présentent des réponses en amplitude (ou puissance) suffisamment caractéristiques pour distinguer de manière fiable leurs positions d, θ et leur orientation β respectives (c'est-à-dire la valeur de l'angle relatif du téléviseur 3 avec la source radar qui sert de référence).

L'étiquette RF 36 du téléviseur 3 peut donc être une étiquette passive.

L'étiquette passive peut comprendre une surface résonante comprenant un réseau de Résonateurs Diélectriques 37 (DR).

Les résonateurs peuvent être réalisés par des billes en dioxyde de zirconium de $ZrO_2$. La réponse fréquentielle de chaque bille présente un maximum d'absorption à 79 GHz et un pic de résonance à 86 GHz pour un bille de diamètre égale à 0,6 mm.

Ces billes peuvent être agencées en réseau, par exemple selon une matrice de taille 9X5.

Avantageusement, pour avoir une réponse fréquentielle de l'étiquette qui dépend moins de l'inclinaison, c'est-à-dire de l'angle d'incidence du signal radar sur l'étiquette, un réflecteur peut être utilisé.

Il a été envisagé d'utiliser un réflecteur tétraédrique.

La réponse angulaire peut alors être utilisée pour en déduire la position angulaire de l'étiquette par rapport à la source radar, en tenant compte de la puissance réémise en fonction de l'angle d'incidence du signal radar.

Toutefois, le réflecteur tétraédrique est encombrant et n'est pas particulièrement adapté pour être fixé sur la surface d'un dispositif de restitution audio tel qu'un téléviseur.

On utilise donc, au lieu du réflecteur tétraédrique, un réflecteur planaire de type *Van Atta* 38.

L'étiquette RF du téléviseur comprend donc un réflecteur *Van Atta* et un réseau de résonateurs diélectriques, par exemple une matrice de billes de $ZrO_2$.

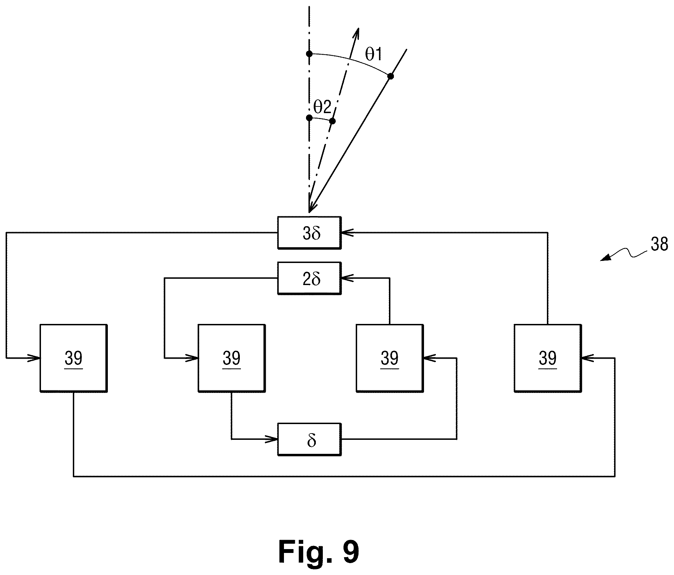

En référence à la figure 9, le réflecteur *Van Atta* 38 est un réseau d'antennes planaires 39 (*patch array*). Ce réflecteur émet un signal rayonné en réponse au signal radar incident.

Le signal incident présente un angle θ1 avec la droite imaginaire orthogonale au plan dans lequel s'étendent les deux antennes. Le signal rayonné présente un angle θ2. Le résonateur créé un offset angulaire :

$$\theta3 = \theta2 - \theta1.$$

δ est un gradient de phase.

Par exemple, ce réflecteur est un circuit à simple face, et par exemple un film flexible (en *Kapton* par exemple) pouvant être réalisé par impression à jet d'encre.

La flexibilité de l'étiquette est particulièrement avantageuse car cela lui permet d'être fixée sur une surface courbe, dans le cas par exemple d'un téléviseur 3 présentant une surface externe courbe. Il est possible de réaliser une étiquette de dimension très réduite (entre 1 et 5 cm de longueur).

Pour estimer l'orientation du téléviseur 3 par rapport à la source radar 31, l'unité de traitement 11 du boîtier décodeur 2 acquiert et exploite la réponse angulaire du réflecteur de *Van Atta* 38.

La réponse du réflecteur *Van Atta* dépend en effet de l'angle d'incidence du signal radar. En effet, cette réponse est maximale pour un angle d'incidence nul (θ1 = 0°, c'est-à-dire lorsque le signal radar incident est perpendiculaire à la surface de l'étiquette RF) et décroit de part et d'autre en formant un lobe principal suivi de deux lobes secondaires (un de chaque côté du lobe principal) au fur et à mesure que l'angle d'incidence augmente.

La puissance réfléchie par le réflecteur peut être mesurée en fonction de l'angle d'incidence et comparée à la puissance en incidence normale, c'est-à-dire à la puissance de référence qui serait obtenue pour un angle nul ($\theta 1 = 0°$), suivant un gabarit de mesure prédéfini (mesuré en usine ou déterminé par le calcul).

Par exemple, dans le cas de l'étiquette passive, cette mesure sera faite en dehors des résonances du réseau diélectrique.

En fonction de la puissance réfléchie par l'étiquette en dehors de la résonance, en mesurant la puissance réfléchie pour un angle d'incidence donné, l'unité de traitement 11 du boîtier décodeur 2 peut avantageusement en déduire, compte tenu de la distance de la cible obtenue par ailleurs, une estimation de l'orientation du téléviseur 3 par rapport au boîtier décodeur 2.

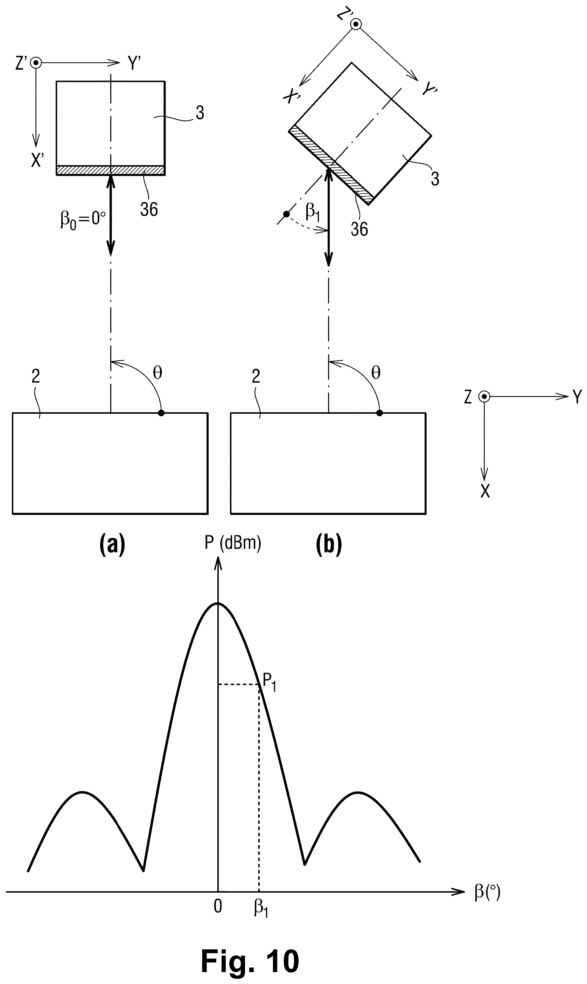

En référence à la figure 10, on explique la manière dont est mesuré l'angle d'orientation $\beta$ que forme la normale à la surface de l'étiquette 36 par rapport à la normale à la surface de référence du boîtier décodeur 2.

Pour une direction de balayage donnée $\theta$ de la source radar 31, on mesure la puissance réfléchie P1 par l'étiquette 36 dans la direction de balayage et on détermine l'angle correspondant à l'angle $\beta 1$ selon un gabarit prédéterminé. Ce gabarit est obtenu dans une position de référence, correspondant par exemple au cas où le téléviseur 3 est positionnée directement en face du boîtier décodeur 2 (c'est-à-dire avec $\theta = 0°$ et $\beta = 0°$).

Les étiquettes RF peuvent aussi être des étiquettes actives.

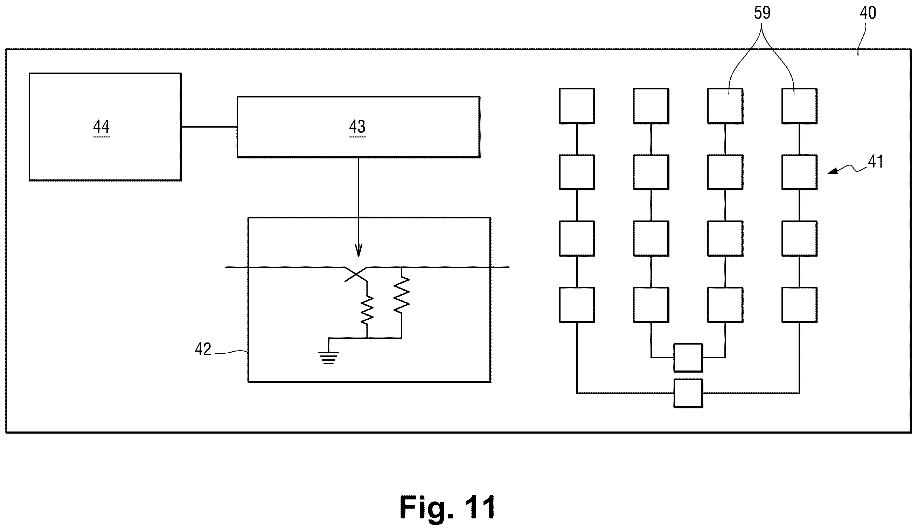

En référence à la figure 11, chaque étiquette RF 40 comprend un réflecteur 41, un ou des commutateurs hyperfréquences 42, et un processeur 43 relativement basique et à basse consommation électrique. Le processeur est par exemple alimenté par une pile bouton 44.

Le réflecteur 41 est actif pendant une période de temps déterminée. C'est le processeur 43 qui active et désactive le réflecteur 41, selon une fréquence déterminée, en pilotant le ou les commutateurs hyperfréquences 42.

Le réflecteur 41 est à nouveau un réflecteur de *Van Atta,* qui comprend un réseau d'antennes planaires 59.

Le processeur 43 active ou non le *réseau de Van Atta.*

Lorsque le réflecteur 41 est activé, il est « visible » par la source radar. Lorsqu'il est désactivé, il disparaît pour la source radar.

L'étiquette active 40 forme donc une cible radar « clignotante » à la fréquence déterminée par le processeur.

Pendant l'activation du réflecteur, le boîtier décodeur mesure le niveau de réception pour estimer l'angle d'inclinaison de l'étiquette, comme précédemment décrit.

Une autre étiquette, positionnée dans un sens orthogonal à la première, activée avec le même processeur mais sur des intervalles de temps disjoints, permettrait comme décrit ci-dessus de mesurer l'angle dans un axe orthogonal accédant ainsi à une mesure 3D.

On note que les étiquettes RF peuvent également être mises en œuvre par des circuits résonants multi-fréquentiels imprimés sur PCB, à l'image des tags passifs RFID UWB existants. De tels circuits sont constitués de trois résonateurs (par exemple deux résonateurs en forme de spirale reliés par un résonateur en forme de ligne (*transmission line*), chaque résonateur pouvant être configuré en mode actif ou passif correspondant à deux états binaires, soit au total $2^3 = 8$ états, c'est-à-dire 8 codes possibles). Ainsi, ces circuits peuvent être configurés pour présenter différentes réponses fréquentielles permettant ainsi d'encoder différentes séquences binaires.

On s'intéresse maintenant à l'acquisition du au moins un paramètre audio représentatif de la réponse acoustique du téléviseur 3.

Le au moins un paramètre audio est sélectionné parmi :

- un retard acoustique lié à une chaîne de transmission entre le boîtier décodeur 2 et le téléviseur 3, et à un traitement réalisé par le téléviseur, et
- une fonction de transfert du téléviseur 3.

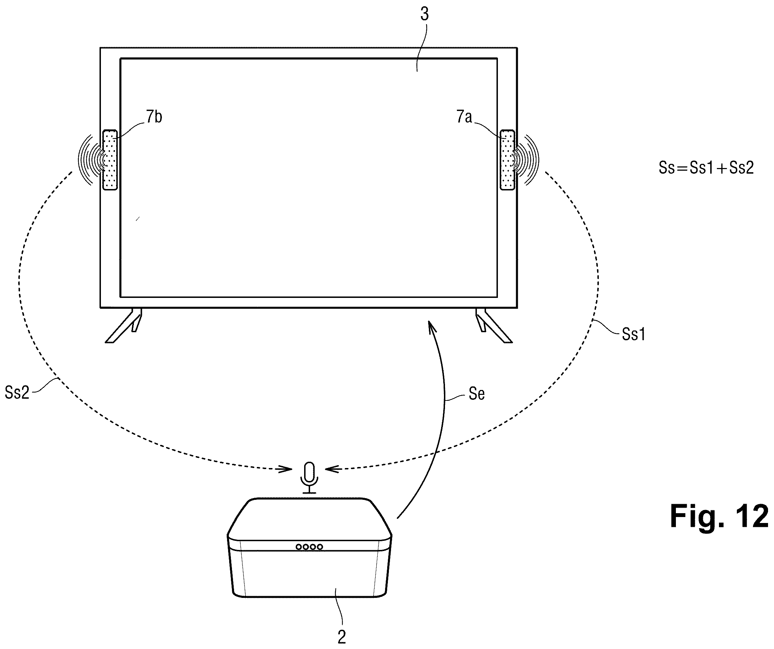

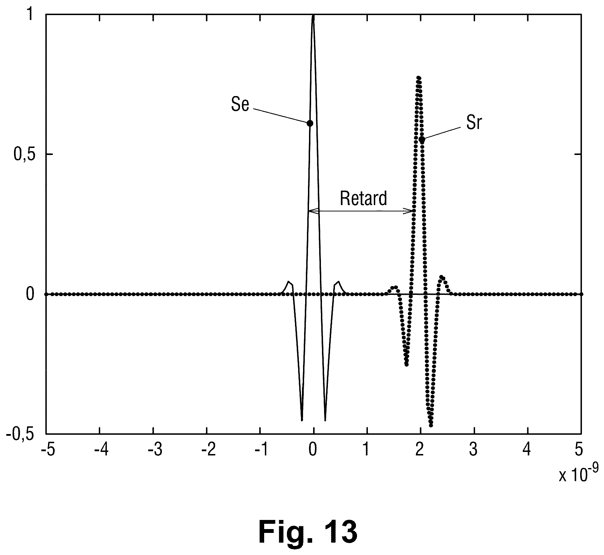

En référence aux figures 12 à 14, pour déterminer le retard acoustique, le boîtier décodeur 2 envoie un signal de synchronisation émis Se (signal audio) au téléviseur 3 via le lien HDMI.

Lorsque le téléviseur 3 reçoit le signal de synchronisation émis Se, le téléviseur 3 applique le signal de synchronisation émis sur ses haut-parleurs 7 qui génèrent un signal de synchronisation sonore Ss. Le haut-parleur 7a génère le signal Ss1 et le haut-parleur 7b génère le signal Ss2 :

$$Ss = Ss1 + Ss2.$$

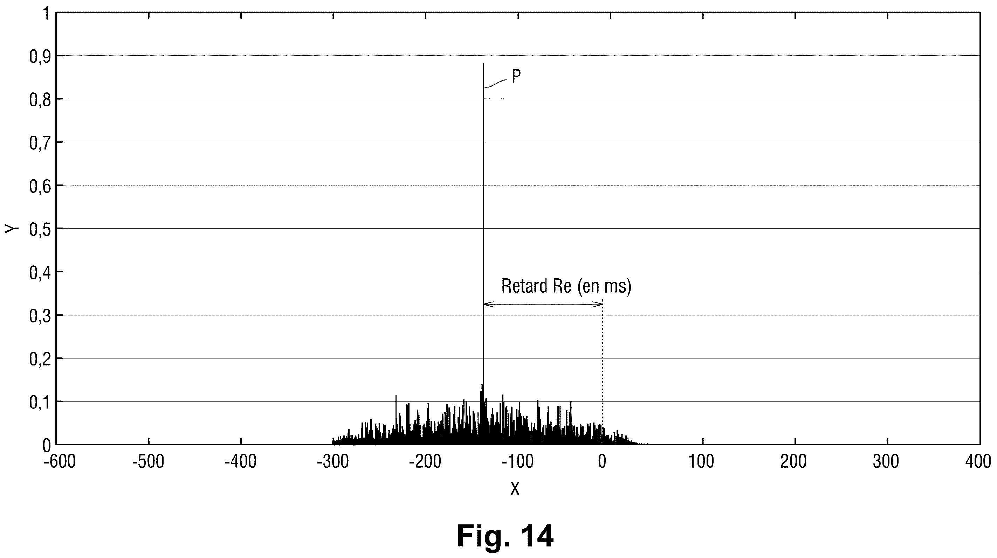

Les microphones 16 du boîtier décodeur 2 capturent le signal de synchronisation sonore Ss et produisent un signal de synchronisation reçu Sr. Puis, le boîtier décodeur 2 estime en temps réel le retard acoustique. Pour cela, l'unité de traitement 11 calcule l'intercorrélation entre le signal de synchronisation émis Se envoyé au téléviseur et le signal de synchronisation reçu Sr. Le signal d'intercorrélation est par exemple semblable au signal de la figure 14. Le moment où se produit le pic P correspond au retard Re.

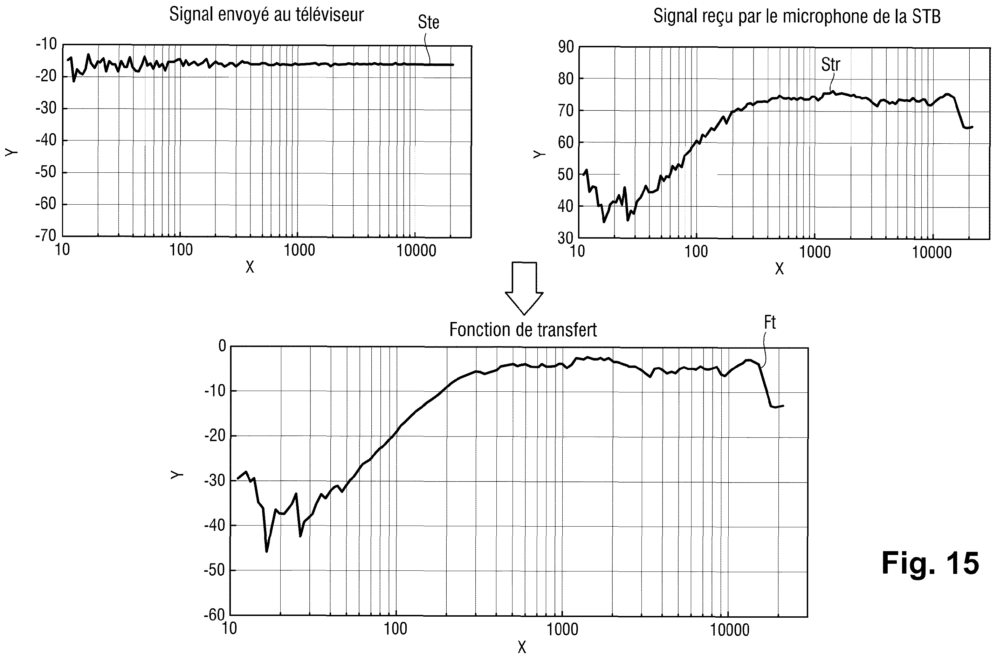

En référence à la figure 15, pour obtenir la fonction de transfert Ft, le boîtier décodeur 2 transmet un signal de test émis Ste au téléviseur, puis capture grâce aux microphones le signal de test sonore produit par les haut-parleurs du téléviseur à partir du signal audio de test. Les microphones produisent un signal de test reçu Str. L'unité de traitement déduit la fonction de transfert du signal de test émis Ste et du signal de test reçu Str.

La fonction de transfert Ft en dB est telle que :

$$Ft = Str - Ste,$$

où Str est la réponse sonore, c'est-à-dire le signal de test reçu produit par les microphones 16 du boîtier décodeur 2, et Ste est l'excitation, c'est-à-dire le signal de test émis envoyé au téléviseur 3.

Dans l'exemple de la figure 15, le signal de test émis Ste est un signal de bruit rose sur une bande de fréquences comprises entre 10 et 18000 Hz. D'autres exemples de signaux de test pourront être utilisés, tels qu'un signal de bruit blanc.

Avantageusement, le au moins un paramètre audio comprend un indicateur d'une modification de volume sonore du téléviseur 3, résultant d'une commande de volume émise par un utilisateur à destination du téléviseur 3, l'unité de traitement 11 du boîtier décodeur 2 étant agencée pour détecter la modification de volume et adapter le ou les premiers signaux audio Sa1 transmis au téléviseur 3 pour compenser ladite modification de volume sonore.

De préférence, la modification de volume sonore est détectée par l'unité de traitement 11 en comparant la fonction de transfert obtenue à deux instants différents. En cas d'augmentation ou de diminution du volume sonore du téléviseur 3, le niveau de la fonction de transfert (en dB) est globalement augmenté ou respectivement réduit d'une quantité donnée sur toute la gamme de fréquences de réponse du téléviseur 3. Par exemple, cette quantité est obtenue par soustraction de la fonction de transfert obtenue à un premier instant et de la fonction de transfert obtenue à un deuxième instant. L'indicateur de la modification de volume du téléviseur 3 est donc par exemple égal à ladite quantité.

Dans un premier mode de réalisation, le système audio 1 est configuré de sorte que le volume sonore global est prévu pour être géré par l'utilisateur uniquement par des commandes de volume émises à destination du boîtier décodeur 2 (donc via la télécommande du boîtier décodeur 2). Les commandes de volume envoyées par l'utilisateur via la télécommande du téléviseur 3 doivent donc être sans effet sur le volume sonore global ressenti.

Dans ce cas, lorsque l'utilisateur envoie une commande de volume au téléviseur 3 (via la télécommande du téléviseur 3), cette commande va modifier la configuration du téléviseur et donc la fonction de transfert du téléviseur. L'unité de traitement 11 du boîtier décodeur 2 va alors modifier le premier signal audio Sa1 du téléviseur 3 de manière à compenser cette modification de volume. Par exemple, si l'utilisateur baisse de 5 dB le volume du téléviseur 3, la fonction de transfert sera baissée de 5 dB. Par un système d'asservissement basé sur la comparaison du niveau en temps réel par rapport à un niveau de référence défini à l'allumage du boîtier décodeur 2, le niveau du deuxième signal audio Sa2 envoyé au téléviseur 3 sera augmenté pour compenser le changement de configuration du téléviseur 3 et permettre d'assurer l'équilibre sonore de l'ensemble du système audio 1.

Dans un deuxième mode de réalisation, le système audio 1 est configuré de sorte que le volume sonore global peut aussi être géré par l'utilisateur par des commandes de volume émises à destination du téléviseur 3 (donc via la télécommande du téléviseur).

Dans ce cas, lorsque l'utilisateur envoie une commande de volume au téléviseur 3, par exemple une baisse de volume, cette commande va modifier la configuration du téléviseur 3 et donc la fonction de transfert du téléviseur 3.

Cette commande de volume est prise en compte par le téléviseur 3, mais c'est bien le boîtier décodeur 2 qui continue à gérer le volume sonore global.

Le boîtier décodeur 2 va donc baisser le volume sonore global dans le système du niveau équivalent mais augmenter le niveau envoyé au téléviseur 3 pour que celui-ci ne subisse pas deux fois la baisse du niveau sonore.

L'invention permet donc de caractériser acoustiquement le téléviseur 3 dans l'environnement de l'utilisateur (performances acoustiques incluant la réponse en fréquence et l'efficacité en tenant compte de réverbérations et réflexions du son en fonction de la position du téléviseur 3 par rapport aux murs de la salle et aux objets) et d'assurer une restitution du son immersive incluant les haut-parleurs 7 du téléviseur 3. L'unité de traitement 11 configure le système audio 1 en temps réel, en utilisant les données de localisation et les paramètres audio.

L'unité de traitement 11 du boîtier décodeur 2 est aussi agencée pour adapter le premier signal audio Sa1 transmis au téléviseur 3 en fonction de l'orientation du téléviseur 3 et de sa fonction de transfert Ft.

Grace aux informations de distance et d'orientation recueillies par la localisation par ondes radio, le boîtier décodeur 2 ajoutera aux traitements précédents une compensation acoustique en fonction de l'orientation des haut-parleurs du téléviseur, en prenant en compte la directivité standard d'un haut-parleur de téléviseur. En effet, celle-ci est globalement connue pour des dimensions de haut-parleurs de quelques centimètres, compatibles avec une utilisation dans un téléviseur (3 à 8 cm habituellement).

Une fonction de transfert présentant une forte atténuation dans les aigus peut être due à un haut-parleur peu efficace dans cette bande de fréquences, ou à un téléviseur 3 orienté d'un angle important par rapport au boîtier décodeur (70 à 90°), ou à une distance importante entre le téléviseur 3 et le boîtier décodeur 2 dans un local d'écoute fortement chargé en matériaux absorbant les aigus. Les informations de distance et de(s) angle(s) préalablement déterminées grâce aux moyens de localisation 15 permettront de s'affranchir des deux dernières incertitudes citées précédemment, et donc de proposer une amplification des aigus dans le signal envoyé au téléviseur 3 pour compenser la faiblesse du haut-parleur. L'unité de traitement 11 modifie donc les niveaux du premier signal audio Sa1 envoyé au téléviseur 3 en fonction de la fréquence acoustique, en fonction de l'orientation et/ou de la position du téléviseur 3.

Comme on l'a déjà dit, l'unité de traitement 11 du boîtier décodeur 2 acquiert la position (et optionnellement) l'orientation du téléviseur 3, acquiert le ou les paramètres audio, et adapte au moins l'un des premiers signaux audio Sa1 du flux audio en fonction de cette/ces informations pour obtenir les deuxièmes signaux audio Sa2. L'unité de traitement 11 transmet alors les deuxièmes signaux audio Sa2 aux différents dispositifs audio pour mettre en œuvre cette restitution multicanale « optimisée ».

Comme on l'a vu, le système audio 1 peut inclure d'autres équipements de restitution audio, et par exemple des enceintes. On équipe donc ces enceintes d'étiquettes RF comme précédemment décrit.

L'unité de traitement 11 connaît donc la position des enceintes et du téléviseur 3, et peut adapter certains premiers signaux audio Sa1 pour produire des deuxièmes signaux audio Sa2 destinés à ces équipements, qui sont adaptés pour leur conférer des fonctionnalités spécifiques dépendant de leur position, par exemple de leur élévation (*up-firing*), de leurs performances acoustiques, de fonctionnalités particulières (caisson de basse), etc.

Cette configuration sert à alimenter le « *mapping* » du fournisseur de son immersif en temps réel. Ainsi, une configuration spécifique à la présence du téléviseur 3 peut être fournie dans le cas où le téléviseur 3 contribue avec ses haut-parleurs intégrés 7 à la restitution sonore, ce qui permet d'améliorer le rendu sonore dans l'espace d'écoute de l'utilisateur.

L'application de l'invention ne se limite pas à des voies arrière mais plus généralement à un système audio comprenant d'autres voies de restitution audio, telles que des caissons de basse et des HP latéraux.

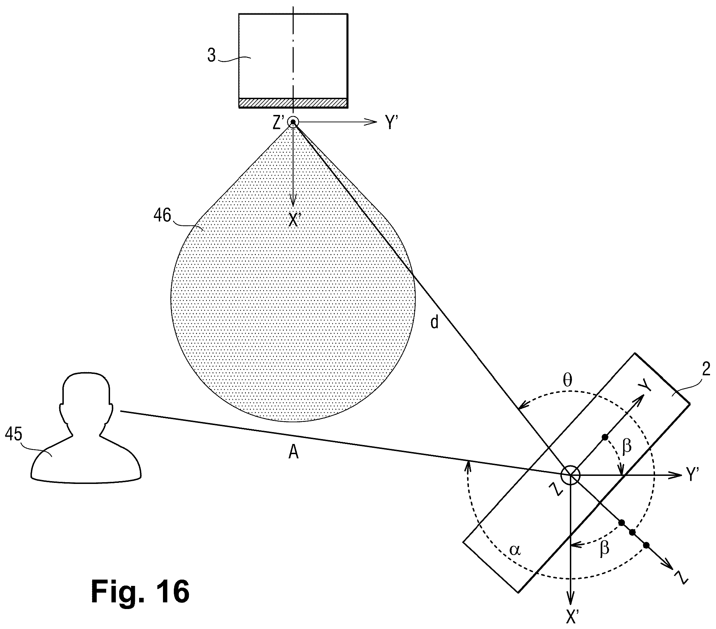

Avantageusement, en référence à la figure 16, le boîtier décodeur 2 détermine aussi la position (A, α) de l'utilisateur 45. L'unité de traitement 11 adapte les premiers signaux audio Sa1 aussi en fonction de la position de l'utilisateur.

En effet, pour configurer de manière optimale un système audio comprenant plusieurs dispositif audio, et donc pour obtenir un rendu immersif, la détermination de la position angulaire (distance, angle) mais aussi de l'orientation de chacune des enceintes par rapport à l'utilisateur 45 est primordiale puisque le diagramme acoustique 46 et donc la puissance relative de l'enceinte en un point donné dépendent de la puissance de l'enceinte et du diagramme de directivité acoustique, ce dernier étant lié à l'orientation de l'enceinte.

Dès lors que la position de l'utilisateur et les positions et orientations de tous les dispositifs de restitution audio sont obtenues, l'unité de traitement 11 utilise ces informations pour configurer ces dispositifs de manière à optimiser le rendu sonore en fonction de la position de l'utilisateur.

Etant donné que les distances (d, A) et angles (θ, β) sont déterminées à intervalles de temps régulier (paramétrable), la configuration peut être ajustée en temps réel en fonction de la position de l'utilisateur.

On note que l'invention peut aussi être mise en œuvre dans le cas où le boîtier décodeur ne comprend pas de moyens de localisation du téléviseur, ni de moyens de capturer les paramètres audio du téléviseur.

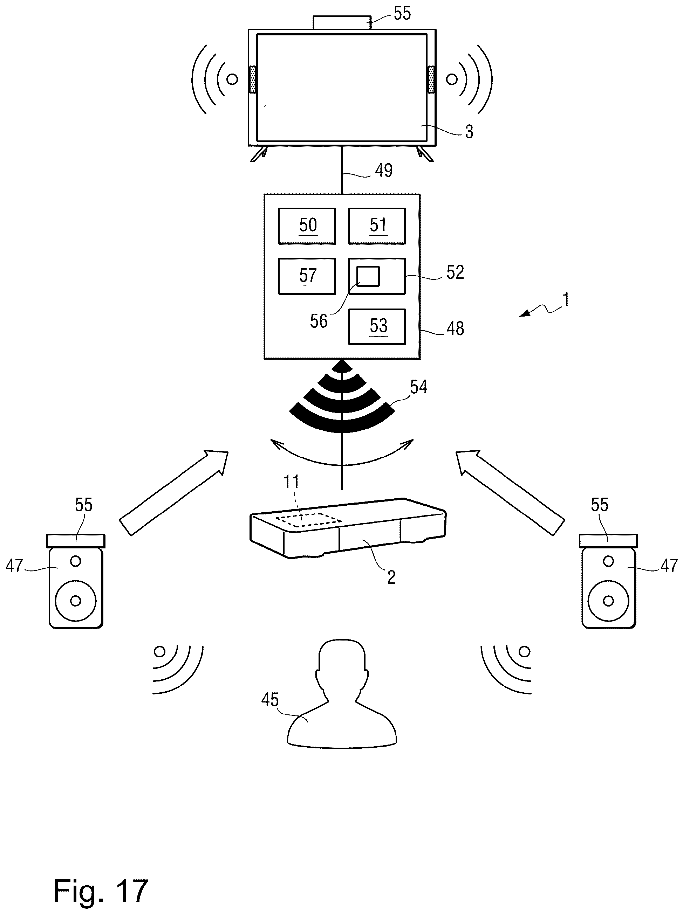

En référence à la figure 17, le système audio 1 comprend les haut-parleurs du téléviseur 3 et les enceintes 47.

Cette fois, le boîtier décodeur 2 est un boîtier décodeur « classique », qui ne comprend pas de haut-parleur et qui ne comprend pas de moyens de localisation.

On intègre dans le système audio 1 un équipement accessoire 48. L'équipement accessoire 48 est par exemple un *dongle*.

L'équipement accessoire 48 est ici connecté au téléviseur 3, par exemple par une liaison HDMI 49.

L'équipement accessoire 48 comporte une unité de traitement 50 (comprenant, comme l'unité de traitement 11, au moins un composant de traitement et au moins une mémoire), un deuxième module de localisation primaire 51, un module de capture audio 52, et un premier module de communication 53.

L'équipement accessoire 48 est connecté au boîtier décodeur 2 par le premier module de communication 53. Le premier module de communication 53 met en œuvre une liaison filaire ou une liaison sans fil 54. La liaison filaire est par exemple une liaison HDMI. Par exemple, l'équipement accessoire 48 est configuré en mode « *pass through* », i.e. laissant passer l'intégralité du signal audio/vidéo en provenance du boîtier décodeur 2.

Le premier module de communication 53 peut aussi comprendre une interface de communication filaire d'un autre type (e.g. Ethernet) pour communiquer avec le boîtier décodeur 2.

Le deuxième module de localisation primaire 51 de l'équipement accessoire 48 évalue la position (et avantageusement l'orientation) du téléviseur 3. Le deuxième module de localisation primaire 51 met en œuvre une méthode de localisation utilisant des ondes radiofréquences. De préférence, la méthode de localisation est la même que celle décrite précédemment lorsqu'elle est mise en œuvre par le boîtier décodeur 2.

Le deuxième module de localisation primaire 51 comprend par exemple le module UWB primaire, ou bien la source radar, le module de réception et le module de traitement qui ont été précédemment décrits.

Le module de capture audio 52 comprend au moins un microphone 56, et est agencé pour produire le moins un paramètre audio représentatif de la réponse acoustique du téléviseur 3.

Ici, pour des raisons de compacité, l'équipement accessoire 48 ne dispose pas de haut-parleurs.

Le téléviseur 3 et les enceintes 47 comprennent chacune un module de localisation radiofréquence 55, par exemple une étiquette.

C'est donc l'équipement accessoire 48 qui détermine la position et l'orientation du téléviseur et des enceintes audio 47 en utilisant une méthode de localisation utilisant des ondes radiofréquences. C'est aussi l'équipement accessoire 48 qui évalue le ou les paramètres audio représentatifs des réponses acoustiques du téléviseur 3 et des enceintes 47.

Ces données sont transmises à l'unité de traitement 11 du boîtier décodeur 2. L'unité de traitement 11 acquiert les données, adapte les premiers signaux audio Sa1 en fonction de ces données, produit les deuxièmes signaux audio Sa2, et met en œuvre la restitution audio multicanale en utilisant les deuxièmes signaux audio Sa2.

Dans un mode de réalisation, c'est le boîtier décodeur 2 qui transmet les deuxièmes signaux audio Sa2 aux dispositifs audio du système audio 1.

Dans un autre mode de réalisation, l'équipement accessoire 48 comprend en outre un deuxième module de communication 57 agencé pour transmettre les deuxièmes signaux audio aux dispositifs audio du système audio 1 pour mettre en œuvre la restitution audio multicanale.

Le premier module de communication 53 de l'équipement accessoire 48 reçoit alors les deuxièmes signaux audio Sa2 produits par le boîtier décodeur 2 et transmis par le boîtier décodeur 2 à l'équipement accessoire 48. C'est alors l'équipement accessoire 48 qui transmet les deuxièmes signaux audio Sa2 aux dispositifs audio pour mettre en œuvre la restitution audio multicanale.

Le deuxième module de communication 57 comprend par exemple une interface de communication sans fil, par exemple selon le protocole IEEE 802.11 (Wi-Fi).

Ainsi, l'équipement accessoire 48 est configuré pour envoyer en Wi-Fi un ou plusieurs flux de données audio vers une pluralité de dispositifs de restitution audio sans fil.

Dans l'exemple de la figure 17, l'équipement accessoire 48 est configuré pour envoyer deux flux audio distincts vers deux enceintes sans fil 47 (Wi-Fi).

Bien évidemment, l'équipement accessoire 48 pourra être configuré selon tout autre protocole de communication sans fil compatible avec les dispositifs de restitution audio sans fil considérés.

Ainsi, l'équipement accessoire 48 équipé de son interface de communication sans fil peut être avantageusement associé à un décodeur audio-visuel dépourvu de capacités de communication sans fil. Dans ce cas, l'équipement accessoire 48 permet l'utilisation d'enceintes sans fil pour une plus grande simplification d'installation.

L'utilisation de l'équipement accessoire 48 est particulièrement avantageuse dans le cas où le boîtier décodeur 2 chez l'abonné ne dispose pas en outre de haut-parleurs intégrés. Dans ce cas, l'abonné peut profiter d'un système immersif en particulier avec restitution sonore à 360° en utilisant des enceintes arrières sans fil connues et les haut-parleurs du téléviseur 3 inconnu.

Selon une variante de réalisation, l'équipement accessoire 48 est configuré pour récupérer auprès du téléviseur 3 des informations relatives au téléviseur 33 (par exemple le modèle du téléviseur, numéro de modèle, nombre et répartition des HP sur le téléviseur), par exemple via la liaison HDMI en accédant à l'EDID (pour *Extended Display Identification Data*) du téléviseur, de manière à pouvoir positionner précisément les haut-parleurs du téléviseur dans l'espace sonore, dès lors que l'étiquette RF associée au téléviseur aura été localisée.

Bien entendu, l'invention n'est pas limitée aux modes de réalisation décrits mais englobe toute variante entrant dans le champ de l'invention tel que défini par les revendications.

Comme on l'a vu, l'équipement de restitution audio dont la position (et éventuellement l'orientation) sont utilisées pour adapter les signaux audio de la restitution multicanale, n'est pas nécessairement un téléviseur.

De même, l'équipement de diffusion audio n'est pas nécessairement un boîtier décodeur, il peut s'agir d'un équipement différent, par exemple d'un amplificateur Hi-Fi relié à des enceintes.

Il serait possible pour déterminer la position (et éventuellement l'orientation) du ou des équipements de restitution audio, d'utiliser des antennes de l'équipement de diffusion audio (et autres composants RF) qui sont déjà utilisés pour d'autres fonctions. Par exemple, dans le cas du boîtier décodeur, on peut utiliser les antennes utilisées pour la communication dans un réseau Wi-Fi. De même, les microphones utilisés peuvent être des microphones initialement prévus pour d'autres fonctions (par exemple la fonction d'assistant vocal). La mise en œuvre de l'invention est alors très peu coûteuse puisqu'elle ne requiert pas de moyens *hardware* (matériels) dédiés, à l'exception de l'étiquette RF positionnée sur l'équipement de restitution audio.

Les modules de localisation peuvent mettre en œuvre des technologies différentes de celles décrites ici. Il est possible par exemple d'utiliser des signaux LIDAR (i.e. Light Detection And Ranging) ou Wi-Fi (ou des signaux de toute autre méthode de communication radio) pour mettre en œuvre la méthode de mesure de temps de vol. On a décrit l'utilisation du mode FMCW pour la méthode de localisation utilisant le radar Doppler. Un autre mode de réalisation envisageable utilise le radar Doppler Pulsé, qui est à base de trains d'ondes, et qui est compatible avec la norme UWB (qui a d'ailleurs un mode radar Doppler Pulsé, puisqu'étant à base de messages donc de nature pulsée).

**Revendications**

1. Equipement de diffusion audio (2), agencé pour mettre en œuvre à partir de premiers signaux audio (Sa1) une restitution audio multicanale dans un système audio (1) comprenant une pluralité de dispositifs audio (3, 47), au moins l'un des dispositifs audio étant intégré dans un équipement de restitution audio (3) distinct de l'équipement de diffusion audio (2), l'équipement de diffusion audio comportant une unité de traitement (11) agencée pour :

   - acquérir une position ($\varphi$, d) de l'équipement de restitution audio (3), obtenue par une méthode de localisation utilisant des ondes radiofréquences ;
   - acquérir au moins un paramètre audio (Ft, Re) représentatif d'une réponse acoustique de l'équipement de restitution audio (3) ;
   - adapter au moins un des premiers signaux audio (Sa1) en fonction de la position de l'équipement de restitution audio (3), et du au moins un paramètre audio (Ft, Re), pour obtenir des deuxièmes signaux audio (Sa2) ;
   - mettre en œuvre la restitution audio multicanale en utilisant les deuxièmes signaux audio (Sa2).

2. Equipement de diffusion audio selon la revendication 1, dans lequel l'unité de traitement (11) est aussi agencée pour acquérir une orientation ($\beta$) de l'équipement de restitution audio (3), et pour adapter au moins un des premiers signaux audio (Sa1) aussi en fonction de l'orientation de l'équipement de restitution audio (3).

3. Equipement de diffusion audio selon l'une des revendications précédentes, comprenant un premier module de localisation primaire (15 ; 34) agencé pour mettre en œuvre une méthode de mesure de temps de vol pour mesurer une distance (d) entre l'équipement de diffusion audio (2) et l'équipement de restitution audio (3), et une méthode de mesure d'angle ($\varphi$, $\theta$, $\beta$) pour mesurer au moins un angle entre l'équipement de diffusion audio (2) et l'équipement de restitution audio (3).

4. Equipement de diffusion audio selon la revendication 3, dans lequel le premier module de localisation primaire (15) comprend un module UWB primaire (20) agencé pour communiquer avec un module UWB secondaire (21) de l'équipement de restitution audio (3).

5. Equipement de diffusion audio selon la revendication 4, le module UWB primaire (20) comprenant deux premiers couples d'antennes (23a, 23b, 24a, 24b) positionnés orthogonalement l'un par rapport à l'autre, les deux premiers couples d'antennes étant agencés pour coopérer avec au moins un deuxième couple d'antennes (27a, 27b, 28a, 28b) intégré dans le module UWB secondaire (21).

6. Equipement de diffusion audio selon la revendication 3, dans lequel le premier module de localisation primaire (34) est agencé pour mettre en œuvre une technique de radar, de préférence Doppler, et comporte une source radar (31) agencée pour coopérer avec au moins une étiquette radiofréquence (36 ; 40) positionnée sur l'équipement de restitution audio (3).

7. Equipement de diffusion audio selon l'une des revendications précédentes, dans lequel ledit au moins un paramètre audio est sélectionné parmi :

   - un retard acoustique (Re) dû à une chaîne de transmission entre l'équipement de diffusion audio (2) et l'équipement de restitution audio (3), et/ou à un traitement réalisé par l'équipement de restitution audio (3), et
   - une fonction de transfert (Ft) de l'équipement de restitution audio (3).

8. Equipement de diffusion audio selon l'une des revendications précédentes, dans lequel le au moins un paramètre audio comprend un indicateur d'une modification de volume sonore résultant d'une commande de volume émise par un utilisateur (45) à destination de l'équipement de restitution audio (2), l'unité de traitement (11) étant agencée pour adapter en fonction dudit indicateur au moins un premier signal audio transmis à l'équipement de restitution audio (3) de manière à compenser ladite modification de volume sonore.

9. Equipement de diffusion audio selon l'une des revendications précédentes, l'équipement de diffusion audio (2) étant un boîtier décodeur (2) intégrant un dispositif audio (4) comprenant au moins un haut-parleur (5).

10. Equipement de diffusion audio selon l'une des revendications précédentes, l'équipement de diffusion audio (2) étant agencé pour déterminer une position (A, $\alpha$) d'un utilisateur (45), l'unité de traitement (11) étant agencée pour adapter au moins un premier signal audio (Sa1) aussi en fonction de la position de l'utilisateur (45).

11. Equipement de diffusion audio selon la revendication 1, l'équipement de diffusion audio (2) étant connecté à un équipement accessoire (48) distinct de l'équipement de diffusion audio (2) et de l'équipement de restitution audio (3), et étant agencé pour recevoir dudit équipement accessoire (48) la position (φ, d) de l'équipement de restitution audio (3), ainsi que ledit au moins un paramètre audio (Ft, Re).

12. Procédé de diffusion audio, mis en œuvre dans l'unité de traitement (11) d'un équipement de diffusion audio (2) selon l'une des revendications précédentes, comprenant les étapes de :

- acquérir une position (φ, d) de l'équipement de restitution audio (3), obtenue par une méthode de localisation utilisant des ondes radiofréquences ;
- acquérir au moins un paramètre audio (Ft, Re) représentatif d'une réponse acoustique de l'équipement de restitution audio (3) ;
- adapter au moins un des premiers signaux audio (Sa1) en fonction de la position de l'équipement de restitution audio (3), et du au moins un paramètre audio (Ft, Re), pour obtenir des deuxièmes signaux audio (Sa2) ;
- utiliser les deuxièmes signaux audio (Sa2) pour mettre en œuvre la restitution audio multicanale.

13. Programme d'ordinateur comprenant des instructions qui conduisent l'unité de traitement (11) de l'équipement de diffusion audio (2) selon l'une des revendications 1 à 11 à exécuter les étapes du procédé de diffusion audio selon la revendication 12.

14. Support d'enregistrement lisible par ordinateur, sur lequel est enregistré le programme d'ordinateur selon la revendication 13.

15. Equipement accessoire (48), agencé pour être connecté à un équipement de diffusion audio selon la revendication 11, l'équipement accessoire comportant :

- un deuxième module de localisation primaire (51) agencé pour évaluer la position (φ, d) de l'équipement de restitution audio (3), le deuxième module de localisation primaire (51) étant agencé pour mettre en œuvre la méthode de localisation utilisant des ondes radiofréquences ;
- un module de capture audio (52), comprenant au moins un microphone (56), et agencé pour produire le au moins un paramètre audio (Ft, Re) représentatif de la réponse acoustique de l'équipement de restitution audio (3) ;
- un premier module de communication (53), agencé pour transmettre à l'équipement de diffusion audio (2) la position (p, d) de l'équipement de restitution audio (3), ainsi que le au moins un paramètre audio (Ft, Re).

16. Equipement accessoire selon la revendication 15, le premier module de communication (53) étant agencé pour recevoir les deuxièmes signaux audio (Sa2) transmis par l'équipement de diffusion audio (2), l'équipement accessoire (48) comprenant en outre un deuxième module de communication (57) agencé pour transmettre les deuxièmes signaux audio aux dispositifs audio (47) du système audio (1) pour mettre en œuvre la restitution audio multicanale.

17. Système comprenant l'équipement de diffusion audio (2) selon l'une des revendications 1 à 11, et un module de localisation secondaire (21 ; 36 ; 40) agencé pour être positionné sur l'équipement de restitution audio (3) et utilisé pour mettre en œuvre la méthode de localisation.

18. Système selon la revendication 17, comprenant un équipement de diffusion audio (2) selon la revendication 6, le module de localisation radiofréquence comprenant ladite au moins une étiquette radiofréquence (36) qui est une étiquette passive comprenant un réseau de résonateurs diélectriques (37) et un réflecteur *Van Atta* (38).

19. Système selon la revendication 17, comprenant un équipement de diffusion audio selon la revendication 6, le module de localisation radiofréquence comprenant la au moins une étiquette radiofréquence (40) qui est une étiquette active comprenant un réflecteur *Van Atta* (41), un commutateur hyperfréquence (42), et un processeur (43) agencé pour activer et désactiver le réflecteur *Van Atta,* selon une fréquence déterminée, en pilotant le ou les commutateurs hyperfréquences.

20. Système selon la revendication 17, comprenant un équipement de diffusion audio selon la revendication 11, le système comprenant en outre l'équipement accessoire (48) selon la revendication 15.

Fig. 1

E1 — Acquisition de la position (et éventuellement de l'orientation) du téléviseur

E2 — Acquisition du ou des paramètres audio

E4 — Vérification du volume du téléviseur

E3 — Adaptation des premiers signaux audio et mise en œuvre de la restitution audio multicanale

**Fig. 2**

Fig. 3

Fig. 4

**Fig. 5**

**Fig. 6**

Fig. 7

EP 4 750 094 A2

Fig. 8

Fig. 9

EP 4 750 094 A2

**Fig. 10**

24

**Fig. 11**

Ss=Ss1+Ss2

Ss1

7a

3

Se

2

7b

Ss2

**Fig. 12**

**Fig. 13**

**Fig. 14**

Fig. 15

EP 4 750 094 A2

**Fig. 16**

Fig. 17